(19) **Europäisches Patentamt**

**European Patent Office**

**Office européen des brevets**

(11) **EP 0 472 921 B1**

(12) **EUROPEAN PATENT SPECIFICATION**

(45) Date of publication and mention
of the grant of the patent:
**10.05.2000 Bulletin 2000/19**

(51) Int. Cl.⁷: **G05B 13/02**

(21) Application number: **91112587.0**

(22) Date of filing: **26.07.1991**

(54) **Fuzzy inference system**

Einrichtung zur "Fuzzy"-Folgerung

Dispositif pour déduction "fuzzy"

(84) Designated Contracting States:
**DE**

(30) Priority:  **26.07.1990 US 32699**

(43) Date of publication of application:
**04.03.1992 Bulletin 1992/10**

(73) Proprietor: **Aptronix Inc.**
**San Jose, California 95131 (US)**

(72) Inventors:
• **Xiwen, Ma**
**San Jose, California 95131 (US)**
• **Hongmin, Zhang**
**San Jose, California 95131 (US)**

• **Weidong, Xu**
**San Jose, California (US)**

(74) Representative:
**WILHELMS, KILIAN & PARTNER**
**Patentanwälte**
**Eduard-Schmid-Strasse 2**
**81541 München (DE)**

(56) References cited:
**EP-A- 0 292 286**          **US-A- 4 839 823**
**US-A- 4 864 490**

• **PATENT ABSTRACTS OF JAPAN, unexamined
applications, P field, vol. 13, No. 276, June 26,
1989 THE PATENT OFFICE JAPANESE
GOVERNMENT page 166 P 890**

**EP 0 472 921 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

## BACKGROUND OF THE INVENTION

FIELD OF THE INVENTION

The present invention relates to a fuzzy inference (or approximate inference or reasoning) system.

DESCRIPTION OF RELATED ART

Conventional fuzzy inference systems have so far not been able to switch inference rule groups at high speeds when inferences are being executed. Therefore, a high-speed inference system has executed the inference processing in accordance with a rule group corresponding to a single task.

In spite of the fact that an ordinary binary-type computer can execute so-called multitask processing, no inference system which can execute multitask processing has been so far realized. Since many objects to be controlled do not necessarily require high speed inference processing, a high speed inference system, cannot use all of its capabilities.

On the other hand, pipeline processing methods have been adopted for conventional binary computers as a method of realizing high speed operation, through utilizing a special architecture. However, since control codes for controlling pipeline processing and the object data to be processed are frequently supplied to the pipeline processing system at different timings, a waiting time often results in the processing means based on the delay between the pipeline control code and the object data. In addition, since the control codes and object data to be processed are supplied externally, these codes and data may not be supplied at the appropriate timings for the process. Further, the waiting time often occurs in the pipeline system when the time at which the processed result is outputted, is delayed. The above-mentioned problems may thereby arise when an inference system is used in a pipeline architecture or format.

In fuzzy inference systems, a number of membership functions are determined in accordance with an inference rule group. Therefore, when input values are given, function values of the membership functions corresponding to input values (the degree to which the input values belong to the membership functions and referred to as adaptability or truth values) can be obtained. In conventional fuzzy inference systems, however, since the membership functions are fixedly set to the hardware construction or the function values of the membership functions are stored in a memory unit, it is difficult to alter, without undue time and labor, the fixedly determined membership functions or to improve the tuning flexibility in the membership functions. Further, when various membership functions required for inference processing are stored in a memory unit, the sheer amount of data in the memory unit will become increasingly large.

When the inference system is adapted to a pipeline control architecture, it becomes extremely important to supply data suitable for that architecture. It also is necessary to construct the system in such a way that the reduction in waiting time can be optimized to increase throughput.

Methods of transforming arithmetic operation programs executed by a microcomputer into data suitable for pipeline control processing are well known. An example of such a method is disclosed in JP-A-64-66734. However, this method cannot transform rule groups that are usable for fuzzy inference processing into a data form that is suitable for a pipeline architecture. This is because, in contrast to microcomputer instructions, fuzzy rules are different from each other in the number and sort of input variables for the antecedent and therefore are not suitable for the pipeline architecture which is based on uniform instructions. As a result, a problem exists in applying and adapting fuzzy inference processing to a pipeline architecture in order to improve the inference speed.

Background art is described in EP-A-0 292 286 and US-A-4 839 823.

An object of the present invention is to provide a pipeline processing apparatus and method which can optimally reduce processor waiting time.

A pipeline processing apparatus of the present invention is defined in claim 1. The apparatus consist of a plurality of processing means electrically connected in the order of fuzzy inference processing, a temporal memory means is connected to a front stage of each of the processing means, for temporarily storing data to be supplied to corresponding processing means and to be transferred to a rear stage processing means, a data storing means for arranging and storing in a predetermined sequence a plurality of composite data each composed of object data to be processed in fuzzy inference processing and operation codes for controlling operations of said processing means, a data reading means for reading the composite data in sequence from the data storing means and supplying the read data to said temporal memory means of the first stage, and a timing signal generating means for generating timing signals to control timings when data are read by she data reading means and when data are latched by the temporal memory means at each stage in such a way that predetermined data or code in a composite data or data formed by said front stage processing means is transferred in sequence from the temporal memory means or the processing means at the front stage to the temporal memory means at the rear stage.

Preferably, the processing means at the final stage is a memory means for storing in sequence data formed by the processing means of the front stage whenever each processing step has been completed.

According to claim 3, a pipeline fuzzy inference processing method according to the present invention is provided for operating a pipeline fuzzy inference processing apparatus including a plurality of processing means arranged in the order of fuzzy inference processing in electrical connection relationship, and a data latching means, connected to a front stage of each of the processing means, for temporarily storing data to be given to the corresponding processing means and to be transferred to the rear stage processing means. The method involves the steps of first forming composite data composed of object data to be processed in fuzzy inference processing and operation codes for controlling operations of the processing means, each of said operation being a unit operation of fuzzy inference processing. A second step then involves arranging and storing the composite data in a predetermined processing sequence; and then reading the composite data beginning from the head of the arranged composite data in a predetermined processing sequence to supply the read data to the data latching means at the first stage.

As described above, the composite data is formed by pairing object data to be processed and operation codes for controlling the operation of the processing procedure. Therefore, it is possible to store a pair of object data to be processed and operation codes in the storing means together, thus reducing the processing time as a whole and simplifying the object data and operation code handling. Further, since the object data to be processed or the results data obtained at the preceding-stage processing means are supplied to the present-stage processing means together with the operation code for controlling the present processing means, it is possible to eliminate the waiting time required to receive the operation code for the processing means, thus increasing the processing speed for each processing means. Further, since a buffer memory is provided at the final stage of the processing means, a series of final processed results can be stored in this buffer memory and outputted simultaneously to an external system when the entire processing sequence has been completed, thus facilitating a synchronized operation between the pipeline processing apparatus and the external system.

BRIEF DESCRIPTION OF THE DRAWINGS

Figs. 1 and 2 are graphical representations showing examples of membership functions;

Fig. 3 is a graphical representation showing membership functions in the form of a singleton;

Figs. 4 and 5 are illustrations for assistance in explaining a fuzzy inference process, in which Fig. 4 shows the processing concerning antecedents and Fig. 5 shows the processing with regard to consequents, respectively;

Fig. 6 is a block diagram showing the fuzzy inference system configuration;

Fig. 7 is an illustration showing a rule group divided into subrules and then rearranged;

Fig. 8 is a format of operation code;

Fig. 9 is a practical example of the operation codes of a rule group shown in Fig. 7;

Fig. 10 is a block diagram showing an example of the controller configuration;

Fig. 11 is a timing chart for assistance in explaining the inference processing operation;

DETAILED DESCRIPTION OF THE PREFERRED EMBODIMENTS

The present invention will be described in detail hereinbelow by taking the case where the invention is applied to a system for executing fuzzy inferences (or approximate inferences) of Modus Ponens.

**(1) Summary of Fuzzy Inference**

A fuzzy inference according to a Modus Ponens is often expressed in the form of an "if, then" statement, as follows:

If x3 = NS and x5 = PM, then yl = NM

where "if x3 = NS and x5 = PM" is referred to as "antecedent", and "then yl = NM" is referred to as "consequent".

The above rule can be simplified as follows:

(Rule 1)

   x3 = NS, x5 = PM          ->          y1 = NM

In the same way, an example of three other rules can be expressed as:

(Rule 2)

   x2 = NL, x4 = NM          ->          y1 = NL

(Rule 3)

   x3 = PL, x2 = PM, x5 = NL          ->          y1 = PL

(Rule 4)

   xl = ZR, x5 = PS, x4 = PL          ->          y1 = NL

Where xi (i = 1, 2, 3, 4, 5, . . . , M) denotes the input variable and yi denotes the output variable. Further, NL, NM, NS, ZR, PS, PM and PL are linguistic information (referred to as labels, hereinafter) representative of membership functions, which imply:

NL :     Negative Large
NM :     Negative Medium
NS :     Negative Small
ZR :     Approximately Zero
PS :     Positive Small
PM :     Positive Medium
PL :     Positive Large

In the above rules, the sequence of the input variables is not regular. However, there exists no problem because these variables are rearranged in an optimum sequence as described later.
The membership functions represent a degree to which the input variables belong to a fuzzy set, and any given functions can be adopted for the membership functions. Here, the above-mentioned seven functions of NL to PL are taken into account (in this embodiment, however, the membership functions of the antecedent can be formed into any given forms by five parameters and set to any desired locations on the input variable axis, as described later). The function values (grades) of the membership functions lie within a range between 0 and 1.

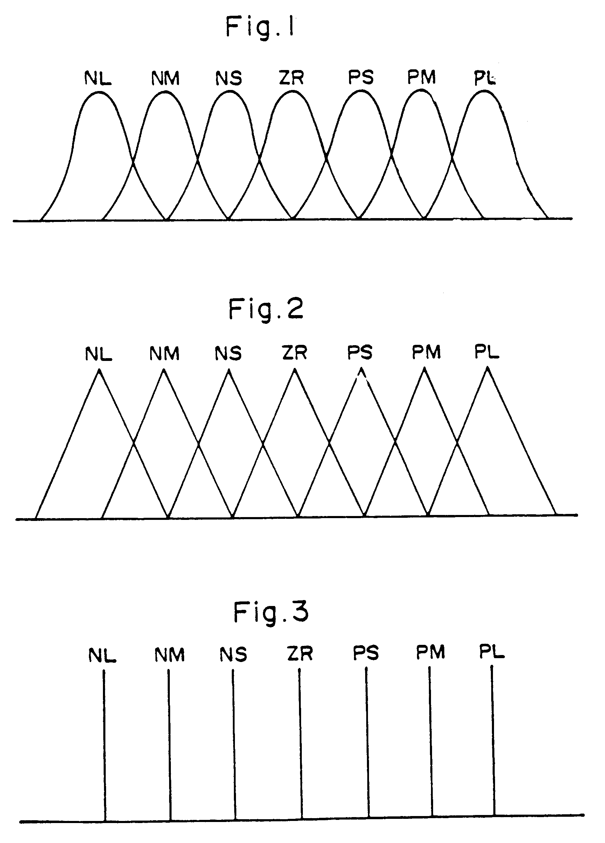

Figs. 1 to 3 show examples of the membership functions.
Fig. 1 shows the aforementioned seven membership functions expressed in the form of a normal (Gaussian) distribution.
Fig. 2 shows examples of the same functions simplified in the form of a triangular shape.
Fig. 3 shows examples of the same functions expressed in the form of a singleton. These singleton expressions are suitable for representing membership functions of the consequent of the rule. In this case, it is possible to extremely simplify the operation for obtaining defuzzified final results.

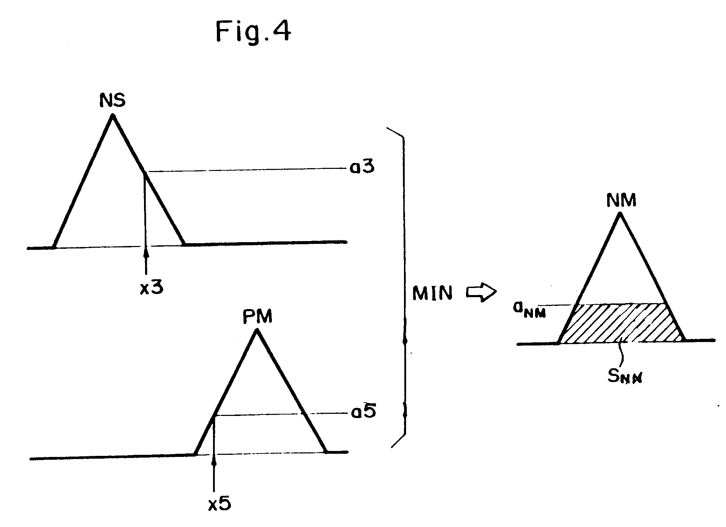

Fig. 4 shows a fuzzy inference process according to rule 1, in which triangular membership functions are shown for simplification.
In Fig. 4, when an input x3 is given, a function value (referred to as the truth value) a3 of the membership function NS can be obtained. In the same way, a truth value a5 of the membership function PM at an input x5 can be obtained.

Then, a MIN operation (for selecting the smallest one) of these truth values a3 and a5 is executed. The executed MIN operation result is expressed as $a_{NM}$.

A MIN operation (truncation) between the membership function NM of the consequent of the rule 1 and the MIN operation result $a_{NM}$ is executed to obtain a membership function $S_{NM}$ as shown by the shaded portion in Fig. 4.

In the same way, fuzzy inferences are executed for all the other rules (inclusive of rules 2 to 4).

The membership functions of the consequents of the rules 2 and 4 are both NL. In such a case, a MAX operation (for selecting the largest one) between an inference operation result $a_{NL1}$ of the antecedent of the rule 2 and an inference operation result $a_{NL2}$ of the antecedent of the rule 4 is executed to obtain a MAX operation result $a_{NL}$. Further, a MIN operation (truncation) between this MAX operation result $a_{NL}$ and the membership function NL is executed to obtain a result $S_{NL}$.

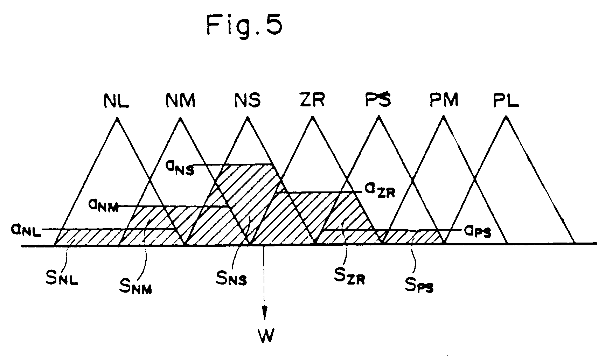

Finally, a MAX operation among the inference operation results $S_{NL}$, $S_{NM}$' $S_{NS}$' $S_{ZR}$ and $S_{PS}$ of all the rules obtained as described above is executed as shown in Fig. 5 to obtain a final result (the results $S_{PM}$ and $S_{PL}$ are zero). A final defuzzified value W can be obtained by defuzzifying the final result (which represents fuzzy information) by calculating a center of gravity thereof, for instance. This final defuzzified value W is outputted as an output y1.

Where the membership functions of the consequents of rules are represented by singletons, the final defuzzified value W can be obtained by the following equation:

$$W = \sum_{k = NL}^{PL} c_k \quad \cdot \quad a_k \quad / \sum_{k = NL}^{PL} a_k \qquad \qquad \ldots (1)$$

where $C_k$ denotes the weight coefficient representing a singleton, and k = NL to PL.

(2) System Configuration

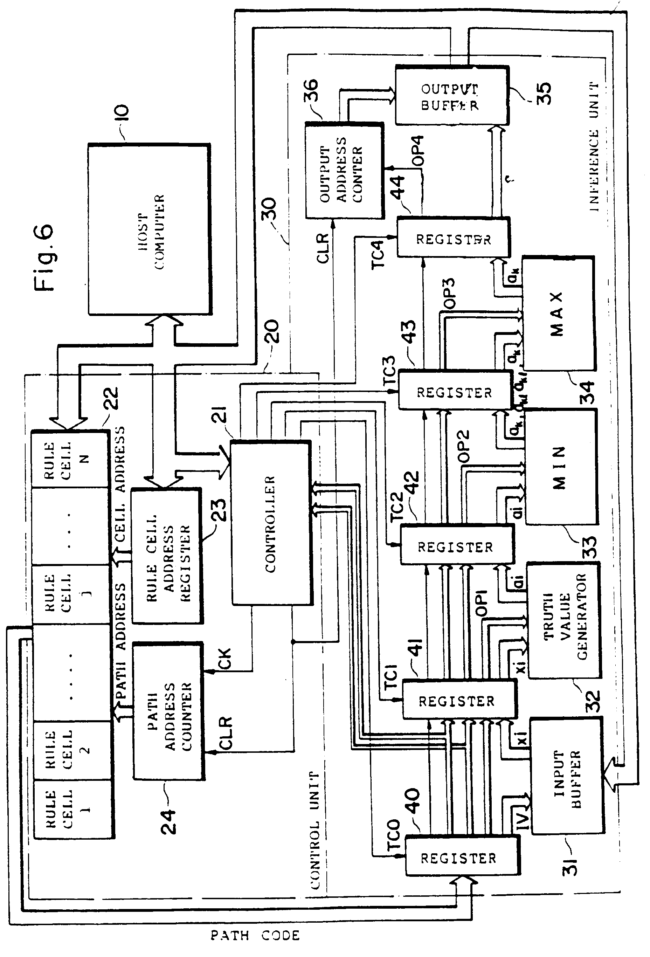

Fig. 6. shows the entire fuzzy inference system configuration. This system comprises an inference unit 30 for obtaining inference operation results $a_k$ (k = NL to PL) with respect to the antecedents in accordance with such rules as above-mentioned and on the basis of pipeline processing; a control unit 20 for supplying path codes, each including data to be operated on and an operation code ("OP code") for controlling operations, to the inference unit 30 in sequence and further for controlling timings for various operations executed in the inference unit 30; and a host computer 10 for supervising the entire system operation.

The inference unit 30 comprises buffer registers 40, 41, 42, 43 and 44 for transferring data to be operated or operation result data and OP codes in sequence in synchronism with timing signals TCO, TC1, TC2, TC3 and TC4; an input buffer 31, a truth value generator 32, a MIN operation section 33 and a MAX operation section 34 all being interposed between two registers, respectively; an output buffer 35 for holding the final operation result $a_k$; and an output address counter 36 for designating memory addresses in the output buffer 35.

The control unit 20 comprises a rule memory 22 for storing a plurality of rule cells (N cells in this embodiment); a rule cell address register 23 for generating cell addresses to designate rule cells in the rule memory 22, respectively; a path address counter 24 for generating path addresses to designate path codes (subrules) in each rule cell, respectively; and a controller 21 for generating the timing signals TCO to TC4 and controlling the path address counter 24 and the output address counter 36.

The host computer 10 is connected to the rule cell address register 23, the rule memory 22 and controller 21 in the control unit 20, and further to the input buffer 31 and the output buffer 35 in the inference unit 30 via a system bus (including an address bus, a data bus and control lines).

(3) Path Codes

The aforementioned rules 1 to 4 are only an example of rules with respect to the output variable y1. There exist other rules with respect to the output variable y1 in general.

The fuzzy inference system can execute multitask processing for a plurality of output variables yj (j = 1 to N). A plurality of rules (i.e. a rule group) are predetermined for each output variable yj. In this embodiment, a rule group with respect to one output variable is referred to as a rule cell. For example, a rule cell 1 implies a set of all rules determined for the output variable y1.

Path codes will be explained hereinbelow by taking the case of rules with respect to the output variable y1 included in the rule cell 1 for simplification.

Each rule can be divided into subrules whose number is the same as that of the input variables. For instance, the aforementioned rule 1 is divided into two subrules as follows:

$$x3 = NS \qquad -> \qquad y1 = NM$$
$$x5 = PM \qquad -> \qquad y1 = NM$$

In the same way, all the rules with respect to the output variable y1 are divided into subrules, respectively.

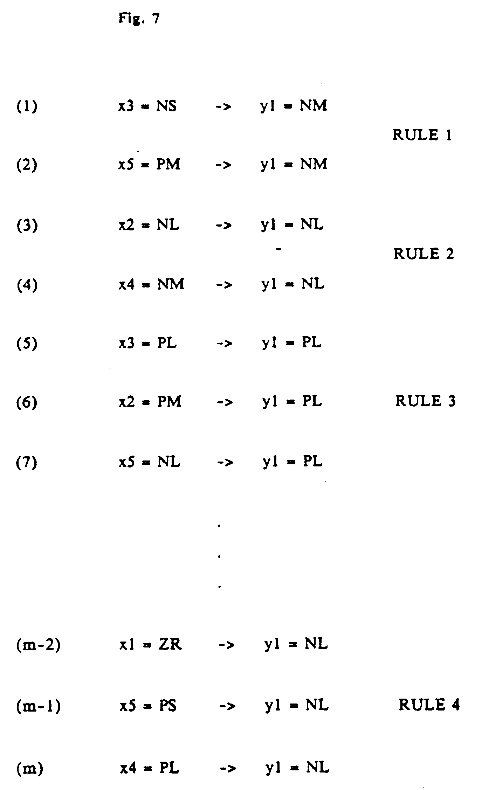

Further, the divided subrules are arranged in a predetermined sequence. Although described in further detail later, here the arrangement sequence is only explained as follows: the subrules are so arranged that the consequent membership functions are in the order of NL, NM, NS, ZR, PS, PM and PL. Fig. 7 shows the case where the subrules are arranged in a predetermined sequence, in which the subrules are designated by reference numerals (1) to (m) for convenience.

Path codes can be formed on the basis of these subrules. One path code can be obtained from one subrule.

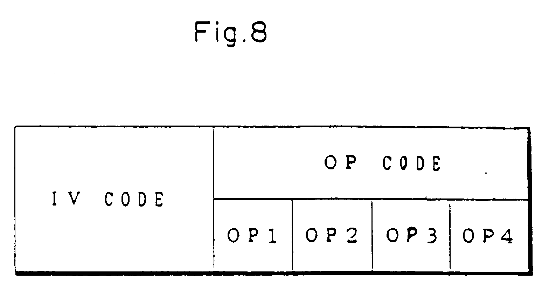

Fig. 8 shows a format of a path code composed of an IV code and an OP code. Further, the OP code is composed of four codes: OP1, OP2, OP3 and OP4.

The IV code is a code for designating the input variables, that is, an address of the input buffer 31 in the inference unit 30, in practice.

The code OP1 includes codes (p1, p2, q1, and q2 described later) for designating a membership function in the truth value generator 32 and a parameter (CW, described later) used to calculate a truth value.

The code OP2 controls the operation of the MIN operation section 33 in the inference unit 30, and is composed of a start bit S and an end bit E.

The code OP3 controls the operation of the MAX operation section 34 in the inference unit 30, and is also composed of a start bit S and an end bit E.

The code OP4 is a single bit code for incrementing the output address counter 36 in the inference unit 30. However, the code OP4 is presented here to systemize the explanation. In practice, the E bit of OP3 is used instead, because OP4 is identical to the E bit of OP3, as shown in Fig. 7.

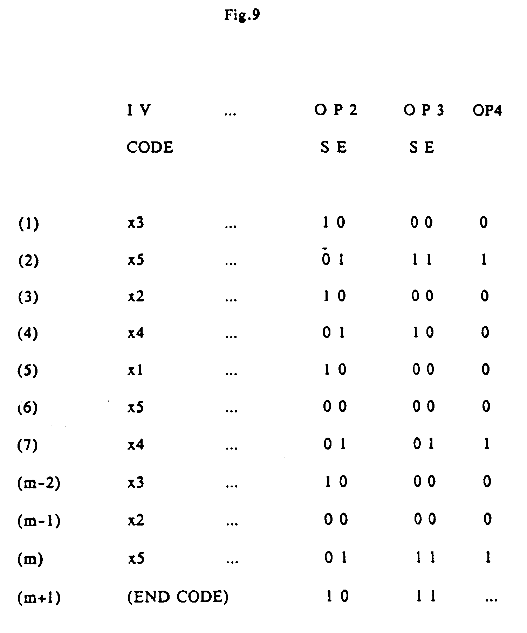

Fig. 9 shows an example of a series of path codes transformed from a series of subrules shown in Fig. 7. The arrangement sequence of these path codes is the same as that of the subrules. In Fig. 9, the IV code is shown only as xi, and the code OP1 is omitted. The codes OP2, OP3 and OP4 and the operation of the sections 33, 34 and 36 controlled by these codes, respectively will be described in further detail later.

An end code (shown by the number (m+1)) is shown at the endmost position of the path code sequence. The end code controls the controller 21 in the control unit 20 so as to output a clear signal CLR. This clear signal CLR serves to reset the path address counter 24 and the output address counter 36. In the end code, only two codes OP2 and OP3 are significant and fixed to (1 0) and (1 1), respectively. Further, a combination of these codes (1 0) and (1 1) will not exert an influence upon the operation of the MIN operation section 33 and the MAX operation section 34. The other IV code and operation codes OP1 and OP4 in the end code are insignificant and therefore are predetermined in such a way as to exert no influence upon the input buffer 31, the truth value generator 32 and the output address counter 36.

The rule cell 1 comprises a set of path codes with respect to the output variable y1 as shown in Fig. 9 and these path codes are formed by the host computer 10 and transferred via the bus to be previously stored in an area of the rule cell 1 in the rule memory 22. In the same way, rule cells 2 to N composed of path code sets are formed with respect to other output variables y2 to yN, and stored in the corresponding areas in the rule memory 22, respectively.

In this embodiment, each rule cell is formed for each output variable. However, it is possible to form a rule cell including rules with respect to two or more output variables. In this case, it is preferable that the path codes are arranged in a predetermined sequence with respect to the output variables.

(4) Control Unit

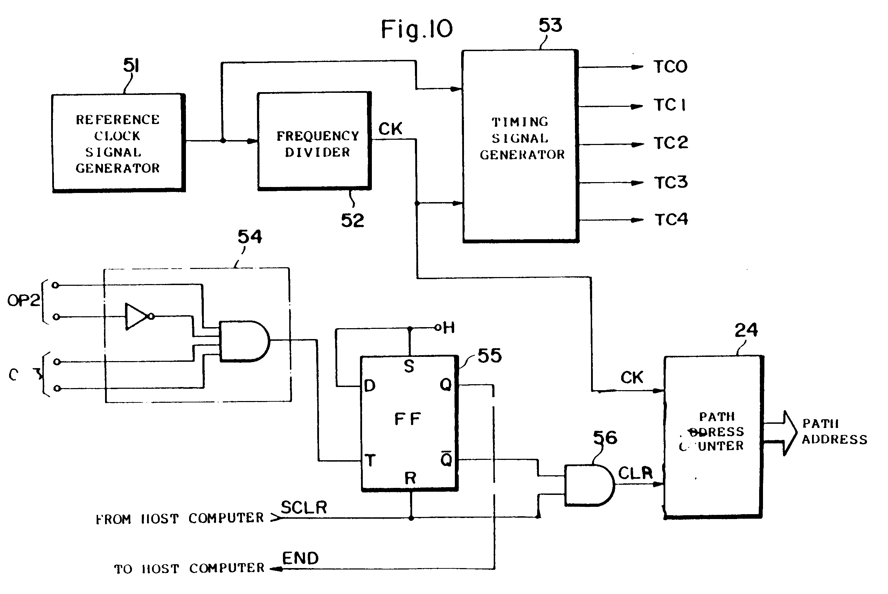

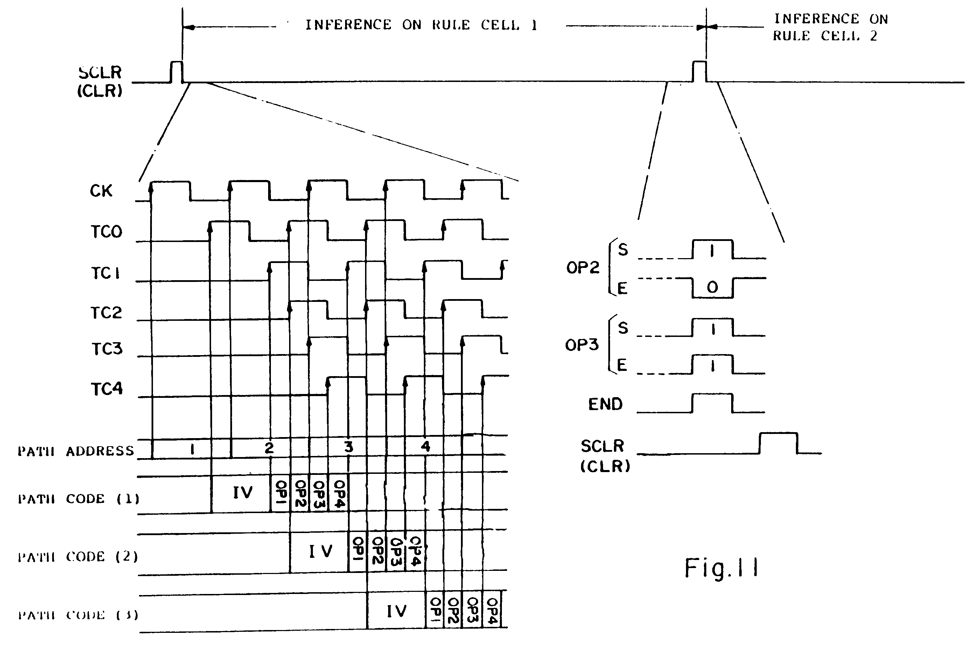

Fig. 10 shows a construction of the controller 21 in the control unit 20. Further, Fig. 11 shows a timing chart for assistance in explaining the operation of the entire system including the controller 21.

With reference to Figs 10-11, the controller 21 is provided with a reference clock generator 51 for outputting a reference clock signal (e.g. 16 MHz) to a timing signal generator 53 and a frequency divider 52. The frequency divider 52 divides a frequency of the reference clock signal into 1/4, for instance, and outputs a clock signal CK (e.g. 4 MHz). This clock signal CK is applied to the timing signal generator 53 and the path address counter 24. The timing signal generator 53 includes a plurality of shift registers and generates five timing signals TCO to TC4 by shifting the input clock signal CK by suitable steps in the shift registers in response to the reference clock signal, respectively.

The controller 21 includes a DT flip-flop 55. A high (H) level signal is applied to a data input terminal of this DT flip-flop 55. The DT flip-flop is reset when a system clear signal SCLR is applied from the host computer 10 to a reset terminal R of the DT flip-flop 55 via a bus (not shown), so that the inversion output Q is set to a high level "H". Since the inversion output Q of the H level and the system clear signal SCLR are applied to an AND gate 56, when the DT flip-flop 55 is reset, the output (the clear signal CLR) of the AND gate 56 is set to an H level, so that the path address counter 24 is reset (cleared to zero) by the H level clear signal CLR. The counter 24 begins to count the inputted clock signals CK after having been reset. The count output signal of this counter 24 is a path address signal. The clear signal CLR is also applied to the output counter 36 of the inference unit 30 to reset (zero clear) this counter 36.

The controller 21 is further provided with an end code detector 54 to which codes OP2 and OP3 of the end code are fed. When these codes OP2 and OP3 are (1 0) and (1 1), fed respectively, the end code detector outputs an H level detection signal to a clock input terminal T of the DT flip-flop 55, so that the DT flip-flop is set and therefore the non-inversion output Q is set to an H level. This H level output Q is applied to the host computer 10 via the bus as an inference end signal END.

In response to this inference end signal END, the host computer 10 recognizes that inference processing in accordance with the one rule cell has been completed, and outputs the system clear signal SCLR again in order to start inference processing in accordance with the succeeding rule cell. In response to the signal SCLR, the DT flip-flop 55 is reset and therefore the address counters 24 and 36 are both reset as already described.

(5) Entire System Operation (Multitask Processing)

With reference to Fig. 6, the host computer 10 previously stores a plurality of rule cells formed as described above at the corresponding areas in the rule memory 22. When inference processing in accordance with the rule cell 1 is required, the host computer 10 sets an address (e.g. the head address) of the area where the rule cell 1 is stored to the rule cell address register 23 via the bus.

Thereafter, the host computer 10 outputs the system clear signal SCLR to reset the path address counter 24 (and the output address counter 36), so that the counter 24 begins to count the number of clock signals CK and to output path address signals incremented sequentially. In response to the path address signals, path codes in the rule cell 1 are read beginning from the first path code in sequence and then supplied to the inference unit 30. The timing signals TC0 to TC4 generated from the controller 21 are also applied to the inference unit 30. The inference unit 30 executes inference processing in accordance with the applied path codes in synchronism with the timing signals TC0 to TC4 as described in further detail later. The inference results $a_k$ are stored in the output buffer 35 in sequence.

When an end code included at the end of a series of path codes is read, and further the codes OP2 and OP3 of the end code are inputted to the controller 21 (via the register 40), the inference end signal END is generated as described already and applied to the host computer 10.

In response to this end signal END, the host computer 10 reads the inference result $a_k$ (k=NL to PL) stored in the output buffer 35 via the bus. Further, when additional inference processing in accordance with the rule cell 2 is required to be executed, the host computer 10 sets an address of an area of the rule cell 2 in the rule memory 22 to that of rule cell address register 23, and outputs the system clear signal SCLR. In response to this signal, the counter 24 and the counter 36 are both reset, so that the counter 24 begins to count the clock signals CK again to output the path address signals. In response to the path address signals, the path codes of the rule cell 2 are read in sequence and then fed to the inference unit 30 to execute an inference in accordance with the rule cell 2 in the same way.

When the host computer 10 reads the inference results $a_k$ (the inference results with respect to the antecedent) from the output buffer 35 of the inference unit 30, the host computer 10 executes the operation in accordance with the aforementioned equation (1) or other consequence processing (e.g. MAX operation and defuzzification) to obtain a final inference result in accordance with the rule cell 1.

As described above, since a plurality of rule cells are previously stored in the rule memory 22, the host computer 10 can start any given inference only by applying a rule cell address for designating a rule cell related to an inference required to be executed and by outputting the system clear signal SCLR. Further, in response to the end signal END indicating that inference processing in accordance with a designated rule cell has been completed, the host computer 10 may read only an inference result from the output buffer 35. Similarly, when another inference is required to be executed, the host computer 10 writes a rule cell address for designating a rule cell to be executed in the register 23 and outputs the system clear signal SCLR. As described above, the host computer 10 can switch inferences required to be executed in sequence at high speed. Here, where an inference in accordance with each rule cell is considered as one task, the host computer 10 can execute a plurality of tasks in sequence without interruption. In addition, since the tasks can be switched by rewriting only the address data in the rule cell address register 23, it is possible to realize a high speed task switching operation.

The inference unit 30 executes an inference operation in accordance with a single rule cell at an extremely high speed. In general, since controlled objects do not require a high speed inference, it is possible to execute a plurality of fuzzy inferences for controlling a plurality of objects by a single fuzzy inference system, because the above-mentioned multitask processing is enabled.

(6) Inference Unit (Pipeline Processing)

The detailed configuration and operation of the inference unit 30 shown in Fig. 6 will be described hereinbelow with reference to the timing chart shown in Fig. 11 on the assumption that the path codes with respect to the output variable y1 shown in Fig. 9 are supplied (a cell address of the rule cell 1 is set to the address register 23).

The count value of the path address counter 24 is incremented by the leading edges of the clock signals CK. That is, after having been reset by the clear signal CLR, when the count value of the counter 24 becomes 1 by the first leading edge of the clock signal CK, the first path code of the rule cell 1 is read from the rule memory 22 and then given to the register 40. The register 40 latches the fed path code at the leading edge of the timing signal TCO. The IV code of the latched pass code is fed to the input buffer 31.

This input buffer 31 has memory areas where input data for all the input variables xi (i = 1 to M) used for all the rule cells 1 to N can be stored, and further an address is determined for each area of each input variable xi.

On the other hand, the host computer 10 reads input values (input data) concerning input variables xi from sensors or input devices (all not shown) periodically, whenever the input values have changed, or at appropriate timings, and writes these input data in the corresponding areas of the input buffer 31 via the bus. In general, these input data are written without synchronism with the inference operation of the inference unit 30. It is possible to release the host computer 10 from the above-mentioned writing processing, by providing other specific hardware for reading input data from sensors and further writing the read data at the corresponding areas in the input buffer 31.

In any case, the input data stored in the input data memory areas concerning corresponding input variables xi are always updated in the input buffer 31. When the IV code is supplied to the input buffer 31, input data (expressed by xi in Fig. 6) written in the memory area whose address is designated by the IV code (that is, in the input data memory area of the input variable xi designated by the IV code), is read and then fed to the register 41.

Thereafter, the OP codes of the path code latched by the register 40 and the input data xi outputted from the input buffer 31 are latched by the succeeding stage register 41 at the timing of the leading edge of the timing signal TC1. The code OP1 of the OP code and the input data xi latched by the register 41 are supplied to the truth value generator 32.

Although the practical configuration of the truth value generator 32 will be described later, the truth value generator 32 is provided with such a function as to calculate and output a truth value ai in the membership function designated by the inputted code OP1 when an input data xi is given. The truth value ai is fed to the succeeding stage register 42.

The codes OP2 to OP4 of the OP code latched by the register 41 and the truth value ai outputted from the truth value generator 32 are latched by the succeeding register 42 at the timing of the leading edge of the timing signal TC2. The code OP2 and the truth value data ai latched by the register 42 are supplied to the MIN operation section 33.

The MIN operation section 33 comprises a MIN circuit, a MIN register, and a decoder for controlling these circuits in accordance with the code OP2. The MIN circuit compares the input data with the data latched in the MIN register. On the other hand, since the code OP2 is composed of two bits as already described, the MIN operation section 33 is controlled by the code OP2 as follows:

If the code OP2 is (1 0), the MIN operation unit 33 latches the input data in the MIN register.

If the OP2 code is (0 0), the input data is compared with the data latched in the MIN register, and the smaller data is latched in the MIN register.

If the code OP2 is (0 1), the input data is compared with the data latched by the MIN register, and the smaller data is outputted to the succeeding stage.

If the code OP2 is (1 1), the input data is outputted to the succeeding stage as it is.

With reference in Fig. 9, for instance, since the code OP2 is (1 0) in the path code No.(1), the input data is latched by the MIN register. Since the code OP2 is (0 1) in the path code No.(2), the input data is compared with the data previously latched in the MIN register and the smaller data is outputted. By the above operation, the MIN operation for two data is completed (See Rule 1).

Similarly, since the code OP2 is (1 0) in the path code No. (3), the input data is latched by the MIN register. Since the code OP2 is (0 1) in the path code No. (4), the input data is compared with the data previously latched in the MIN register and the smaller data is outputted. By the above operation, the MIN operation for two data is completed (see Rule 2).

Further, since the code OP2 is (1 0) in the path code No.(5), the input data is latched in the MIN register. Since the code OP2 is (0 0) in the path code No.(6), the input data is compared with the data previously latched in the MIN register, and the smaller data is latched in the MIN register. Since the code OP2 is (0 1) in the path code No.(7), the input data is compared with the data latched in the MIN register, and the smaller data is outputted. By the above operation, the MIN operation of three data is completed (See Rule 4).

As described above, the MIN operation section 33 executes a MIN operation for a plurality of path codes, and outputs the operation result $a_k$ or $a_{kl}$ (k = NL to PL, $\ell$ = 1, 2, ...) when the MIN operation has been completed (when OP = (0 1)).

The codes OP3 and OP4 latched by the register 42 and the MIN operation result (outputted only when the MIN operation has been completed as described above) of the MIN operation section 33 are latched by the succeeding stage register 43 at the timing of the leading edge of the timing signal TC3. The code OP3 latched by the register 43 and the MIN operation result data (if obtained) are supplied to the MAX operation section 34.

The MAX operation section 34 comprises a MAX circuit, a MAX register and a decoder for controlling these circuits in accordance with the code OP3. The MAX circuit compares the input data with the data latched in the MAX register. Since the code OP3 is composed of two bits as already described, the MAX operation section 34 is controlled by the code OP3 as follows:

If the code OP3 is (1 0), the MAX operation section 34 latches the input data in the MAX register.

If the code OP3 is (0 0), the input data is compared with the data latched in the MAX register, and the larger data is latched in the MAX register.

If the code OP3 is (0 1), the input data is compared with the data latched by the MAX register, the larger data is outputted to the succeeding stage.

If the code OP3 is (1 1), the input data is outputted as it is.

With reference to Fig. 9, for instance, since the code OP3 is (0 0) in the path code No.(1), the input data is compared with the MAX register data, and the larger data is latched by the MAX register. In this case, however, since the preceding stage MIN operation section 33 outputs no data (i.e. the input data is zero) and the MAX register is kept cleared (i.e. the data is zero), nothing happens.

Since the code OP3 is (1 1) in the path code No. (2), the input data $a_{k1}$ (k = NM in Rule 1) is outputted as it is ($a_{NM}$ in rule 1; see Fig. 4).

Since the code OP3 is (0 0) in the path code No. (3), the input data is compared with the MAX register data $a_{k1}$, and the larger data is latched by the MAX register. In this case, however, since the MIN operation section 33 outputs no signal (i.e. the input data is zero), the data $a_{k1}$ is kept latched in the MAX register.

Since the code OP3 is (1 0) in the path code No. (4), the data $a_{k1}$ is latched in the MAX register.

Since the code OP3 is (0 0) in the path code No. (5), and there exists no input data, the MAX operation section 34 is kept unchanged. Again, since the code OP3 is (0 0) in path code No. (6), and there exists no input data, the MAX operation section 34 is kept unchanged.

Since the code OP3 is (0 1) in the path code No. (7), the input data $a_{k2}$ is compared with the MAX register data $a_{k1}$, and the larger data is outputted as data $a_k$. Here, the MAX operation for two data is completed (MAX operation for rules 2 and 4).

Since there are many rules which require no MAX operation as in rule 1 or 3, in this case the MAX operation section 34 serves to only pass data.

At the timing of the leading edge of the timing signal CT4, the code OP4 latched in the register 43 and the output $a_k$ (if any) of the MAX operation section 34 are latched by the register 44.

Since the code OP4 is one bit, the code OP4 is set to "1" when the operation result is outputted from the MAX operation section 34 (when OP3 is (0 1)) or when the MIN operation result is outputted through the MAX operation section 34 (when OP3 is (1 1)). The code OP4 is set to "0" in those cases other than the above. That is, the code OP4 is set to "1" only when the label of the consequent membership function changes.

The code OP4 is inputted to the output address counter 36. The counter 36 is then reset in response to the clear signal CLR as already described above, and counts the code OP4 when the code OP4 is "1".

The output buffer 35 shown in Fig. 6 includes seven areas where seven inference results $a_k$ concerning antecedents corresponding to all seven consequent labels are stored. These areas are designated by count values (addresses) of the counter 36. When the inference result $a_k$ is outputted from the MAX operation section 34 and latched by the register 44, the count value of the counter 36 is incremented, and the data $a_k$ latched by the register 44 is stored at an area of the output buffer 35 designated by the count value of the counter 36.

In the case where the number of labels of the consequent membership functions is six or less for a rule group which constitutes one rule cell, six or less data $a_k$ corresponding thereto are stored in the output buffer 35. Further, in the case where rules with respect to two or more output variables are included in one rule cell, fourteen or more data areas, for instance, are to be provided for the output buffer.

Since the path address counter 24 of the control unit 20 counts the leading edges of the clock signal CK as already described and outputs signals for addressing the path codes in a designated rule cell in sequence, the path codes are supplied to the register 40 in sequence at the same period as that of the clock signal CK. Further, the period of the timing signals TCO to TC4 is the same as that of the clock signal CK. Therefore, as depicted in Fig. 11, the registers 40 to 44 latch inputted codes and data in sequence at each period of the clock signal, for reading the input data and executing truth value calculations, MIN operations and MAX operations.

Further, various processings occur with respect to a specified path code flow in the rightward direction in Fig. 6 every clock period. Therefore, it is possible to realize perfect pipeline processing having no wasted time (e.g. waiting time) at any path code and at any processing stage, because both data to be processed and OP codes for controlling processing to be executed at each stage, are included together in the path code.

After the processing for one rule cell has been completed, a special code (1 0 1 1) (OP2, OP3) included in the end code, as previously described, is detected by the controller 21, and the end signal END is applied to the host computer 10. The host computer 10 reads the inference operation result stored in the output buffer 35 from the bus 11. In this case, since the output buffer 35 is provided at the final stage, the host computer 10 can easily read the inference result data.

## Claims

1. A pipeline fuzzy inference processing apparatus (30) comprising:

   a plurality of processing means (31-35) electrically connected in the order of fuzzy inference processing;
   temporal memory means (40-44) connected to a front stage of each of said processing means, for temporarily storing data to be supplied to corresponding processing means and to be transferred to a rear stage processing means;
   data storing means (22) for arranging and storing in a pre-determined sequence a plurality of composite data each composed of object data to be processed in fuzzy inference processing and operation codes (OP1-OP4) for controlling operations of said processing means, each of said operations being a unit operation of fuzzy inference processing and having corresponding processing means;
   data reading means (10) for reading the composite data in sequence from said data storing means and supplying the read data to said temporal memory means of first stage; and
   timing signal generating means (21) for generating timing signals (TC0-TC4) to control timings when data are read by said data reading means and when data are latched by said temporal memory means at each stage in such a way that predetermined data or code in a composite data or data formed by said front stage processing means is transferred in sequence from said temporal memory means or said processing means at said front stage to said temporal memory means at said rear stage.

2. The pipeline processing apparatus of claim 1, wherein said processing means at the final stage is a memory means (35) for storing in sequence data formed by said processing means of said front stage whenever each processing has been completed.

3. A pipeline fuzzy inference processing method for operating a pipeline fuzzy inference processing apparatus (30) including a plurality of processing means (31-35) arranged in the order of fuzzy inference processing in electrical connection relationship and data latching means (40-44), connected to a front stage of each of said processing means, for temporarily storing data to be given to corresponding processing means and to be transferred to a rear stage processing means, which comprises the steps of:

   forming composite data composed of object data to be processed in fuzzy inference processing and operation codes for controlling operations of said processing means, each of said operations being an unit operation of fuzzy inference processing;
   arranging and storing said composite data in a predetermined processing sequence; and
   reading said composite data beginning from the head in the predetermined processing sequence to supply the read data to said data latching means at the first stage.

## Patentansprüche

1. Pipeline-Fuzzyschlußfolgerungsverarbeitungsvorrichtung (30), welche aufweist:

   eine Anzahl von Verarbeitungsmitteln (31-35), die in der Reihenfolge der Fuzzyschlußfolgerungsverarbeitung elektrisch verschaltet sind,
   Zwischenspeichermittel (40-44), die mit einer vorderen Stufe jeder der Verarbeitungsmittel verbunden sind, zur Zwischenspeicherung von Daten, die an entsprechende Verarbeitungsmittel zu liefern und die an Verarbeitungsmittel einer rückwärtigen Stufe zu übertragen sind,
   Datenspeichermittel (22) zur Anordnung und Speicherung einer Anzahl von zusammengesetzten Daten, die jeweils aus in Fuzzyschlußfolgerungsverarbeitung zu verarbeitenden Zieldaten und Operationscodes (OP1-OP4) zur Steuerung von Operationen der Verarbeitungsmittel zusammengesetzt sind, wobei jede der Operationen eine Einheitsoperation von Fuzzyschlußfolgerungsverarbeitung ist und entsprechende Bearbeitungsmittel hat,

Datenlesemittel (10) zum Auslesen der zusammengesetzten Daten in Folge aus den Datenspeichermitteln und Liefern der ausgelesenen Daten an die Zwischenspeichermittel der ersten Stufe, und

Taktsignalerzeugungsmittel (21) zum Erzeugen von Taktsignalen (TC0-TC4) zur Steuerung von Zeiten, zu denen Daten mit den Datenlesemitteln gelesen werden und zu denen Daten durch die Zwischenspeichermittel an jede Stufe in einer solchen Weise verriegelt werden, daß bestimmte Daten oder Codes in zusammengesetzten Daten oder Daten, die durch die Vorderstufenverarbeitungsmittel gebildet sind, in Folge aus den Zwischenspeichermitteln oder den Verarbeitungsmitteln an der vorderen Stufe an die Zwischenspeichermittel der hinteren Stufe übertragen werden.

2. Pipeline-Verarbeitungsvorrichtung nach Anspruch 1, wobei die Verarbeitungsmittel an der Endstufe Speichermittel (35) zur Speicherung von Daten, die durch die Verarbeitungsmittel an der vorderen Stufe gebildet sind, in Folge jedesmal, wenn eine Verarbeitung abgeschlossen ist, sind.

3. Pipeline-Fuzzyschlußfolgerungsverarbeitungsverfahren zum Betreiben einer Pipeline-Fuzzyschlußfolgerungsverarbeitungsvorrichtung (30), welche eine Anzahl von Verarbeitungsmitteln (31-35), die in der Reihenfolge von Fuzzyschlußfolgerungsverarbeitung in elektrischer Verbindungsbeziehung angeordnet sind und mit einer Vorderstufe jeder der Verarbeitungsmittel verbundene Datenverriegelungsmittel (40-44) zur Zwischenspeicherung von Daten, die auf entsprechende Verarbeitungsmittel zu geben sind und auf Bearbeitungsmittel einer rückwärtigen Stufe zu übertragen sind, enthält, welches die folgenden Verfahrensschritte aufweist:

Bilden von zusammengesetzten Daten, die sich aus in Fuzzyschlußfolgerungsverarbeitung zu verarbeitenden Zieldaten und Operationscodes zur Steuerung von Operationen der Verarbeitungsmittel zusammensetzen, wobei jede der Operationen eine Einheitsoperation von Fuzzyschlußfolgerungsverarbeitung ist,
Anordnen und Speichern der zusammengesetzten Daten in einer bestimmten Verarbeitungsfolge, und
Auslesen der zusammengesetzten Daten, beginnend am Kopf in der bestimmten Verarbeitungsfolge, zur Lieferung der ausgelesenen Daten an die Datenverriegelungsmittel der ersten Stufe.

**Revendications**

1. Appareil de traitement d'inférence floue en pipeline (30) comprenant :

■ une pluralité de moyens de traitement (31 à 35) connectés, de façon électrique, dans l'ordre du traitement d'inférence floue ;
■ des moyens de mémoire temporelle (40 à 44) connectés à un étage avant de chacun desdits moyens de traitement pour un stockage temporaire de données à fournir aux moyens correspondants de traitement et devant être transférées à un moyen de traitement d'étage arrière ;
■ un moyen de stockage de données (22) pour agencer et stocker, selon une séquence prédéterminée, une pluralité de données composites composées chacune de données d'objet devant être traitées lors d'un traitement d'inférence floue et de codes de fonctionnement (OP1 à OP4) pour commander les opérations dudit moyen de traitement, chacune desdites opérations étant une opération d'unité de traitement d'inférence floue et possédant un moyen de traitement correspondant ;
■ un moyen de lecture de données (10) pour lire les données composites en séquence à partir dudit moyen de stockage de données et pour fournir les données lues audit moyen de mémoire temporelle du premier étage ; et
■ un moyen de génération de signal de calage dans le temps (21) pour générer des signaux de calage dans le temps (TCc0 à TC4) afin de commander les calages dans le temps lorsque des données sont lues par ledit moyen de lecture de données et lorsque des données sont verrouillées par ledit moyen de mémoire temporelle à chaque étage de telle façon que des données prédéterminées ou un code dans une donnée composite ou des données formées par ledit moyen de traitement d'étage avant soient transférées en séquence à partir dudit moyen de mémoire temporelle ou dudit moyen de traitement sur ledit étage avant audit moyen de mémoire temporelle sur ledit étage arrière.

2. Appareil de traitement en pipeline selon la revendication 1, dans lequel ledit moyen de traitement sur l'étage final est un moyen de mémoire (35) pour stocker en séquence des données formées par ledit moyen de traitement dudit étage avant toutes les fois que chaque traitement est terminé.

3. Procédé de traitement d'inférence floue en pipeline pour faire fonctionner un dispositif de traitement d'inférence floue en pipeline (30) comprenant une pluralité de moyens de traitement (31 à 35) agencés dans l'ordre du traitement d'inférence floue selon une relation de connexion électrique et des moyens de verrouillage de données (40 à 44) connectés à un étage avant de chacun desdits moyens de traitement pour un stockage temporaire de données devant être fournies aux moyens correspondants de traitement et devant être transférées dans un moyen de traitement d'étage arrière, comprenant les étapes suivantes :

■ la formation de données composites composées de données d'objet devant être traitées lors d'un traitement d'inférence floue et de codes de fonctionnement pour commander les opérations desdits moyens de traitement, chacune desdites opérations étant une opération d'unité de traitement d'inférence floue ;

■ l'agencement et le stockage desdites données composites selon une séquence prédéterminée de traitement ; et

■ la lecture desdites données composites en commençant par le début dans la séquence prédéterminée de traitement pour fournir les données lues auxdits moyens de verrouillage de données sur le premier étage.

# Fig.1

NL    NM    NS    ZR    PS    PM    PL

# Fig.2

NL    NM    NS    ZR    PS    PM    PL

# Fig.3

NL    NM    NS    ZR    PS    PM    PL

# Fig.4

# Fig.5

Fig.6

HOST COMPUTER — 10

CONTROL UNIT — 20

RULE CELL 1 | RULE CELL 2 | ... | RULE CELL j | ... | RULE CELL N — 22

CELL ADDRESS

RULE CELL ADDRESS REGISTER — 23

PATH ADDRESS

PATH ADDRESS COUNTER — 24

CK, CLR

CONTROLLER — 21

INFERENCE UNIT — 30

OUTPUT BUFFER — 35

OUTPUT ADDRESS COUNTER — 36

CLR, TC4

REGISTER — 44, OP4

MAX — 34

REGISTER — 43, OP3, TC3

MIN — 33

REGISTER — 42, OP2, TC2

TRUTH VALUE GENERATOR — 32

REGISTER — 41, OP1, TC1

INPUT BUFFER — 31

REGISTER — 40, TC0, IV

PATH CODE

Fig. 7

(1)　　　　x3 = NS　　->　y1 = NM

　　　　　　　　　　　　　　　　　　　RULE 1

(2)　　　　x5 = PM　　->　y1 = NM

(3)　　　　x2 = NL　　->　y1 = NL

　　　　　　　　　　　　　　-　　　RULE 2

(4)　　　　x4 = NM　　->　y1 = NL

(5)　　　　x3 = PL　　->　y1 = PL

(6)　　　　x2 = PM　　->　y1 = PL　　RULE 3

(7)　　　　x5 = NL　　->　y1 = PL

.

.

.

(m-2)　　　x1 = ZR　　->　y1 = NL

(m-1)　　　x5 = PS　　->　y1 = NL　　RULE 4

(m)　　　　x4 = PL　　->　y1 = NL

# Fig.8

| IV CODE | OP CODE | | | |
|---------|---------|---------|---------|---------|
| | OP 1 | OP 2 | OP 3 | OP 4 |

Fig.9

| | I V CODE | ... | O P 2 S E | O P 3 S E | OP4 |
|---|---|---|---|---|---|
| (1) | x3 | ... | 1 0 | 0 0 | 0 |
| (2) | x5 | ... | 0̄ 1 | 1 1 | 1 |
| (3) | x2 | ... | 1 0 | 0 0 | 0 |
| (4) | x4 | ... | 0 1 | 1 0 | 0 |
| (5) | x1 | ... | 1 0 | 0 0 | 0 |
| (6) | x5 | ... | 0 0 | 0 0 | 0 |
| (7) | x4 | ... | 0 1 | 0 1 | 1 |
| (m-2) | x3 | ... | 1 0 | 0 0 | 0 |
| (m-1) | x2 | ... | 0 0 | 0 0 | 0 |
| (m) | x5 | ... | 0 1 | 1 1 | 1 |
| (m+1) | (END CODE) | | 1 0 | 1 1 | ... |

Fig.10

EP 0 472 921 B1

Fig.11